# EUROPEAN PATENT APPLICATION

(11) **EP 4 768 777 A1**
(43) Date of publication of application: **01.07.2026**
(21) Application number: 24223784.0
(22) Date of filing: 30.12.2024
(51) Int. Cl.: F21S 43/241, F21S 43/20, F21S 43/31, F21S 43/40

(54) **LIGHT GUIDE FOR A LAMP ASSEMBLY**

(71) Applicant: OPmobility Lighting Germany GmbH, 80807 München (DE)
(72) Inventor: JUHANAK, Michal, 742 42 Senov u Nového Jicína (CZ); GROF, Jan, 742 42 Senov u Nového Jicína (CZ); BLINKOVA, Jana, 742 42 Senov u Nového Jicína (CZ)
(74) Representative: LLR

(57) **Abstract**

Vehicle lamp having a light guide (1) and light guide (1) emitting a light blade, has two opposite large walls (7, 8), an elongated thin exit face (10), a reflective surface (11) opposite the exit face (10), a plurality of coupling locations (4) for receiving light sources on one of the side walls,

A plurality of collimators (14) is arranged at the coupling locations (4) for collecting light emitted by light sources and directing collimated beams towards the reflective surface (11). The reflective surface (11) is configured to focalize the reflected rays in a focal region (15) located upstream the exit face (10).

## Description

### Technical field

The invention relates to the field of automotive lighting, particularly to a lamp showing a light blade.

### Background art

EP3486558 discloses a light blade made of a planar light guide enlighten with light sources. Since the light sources are too cumbersome compared to the thickness of the light blade, they are located at one end of the light guide on a side wall of the planar light guide and the light guide has a reflective surface forming a corner for reflecting light inside the light guide towards its other end. Light is transmitted inside the light guide by total internal reflection and some of the light is decoupled before reaching the front face of the light guide. Hence, optical efficiency needs improvement.

### Technical problem

The invention addresses the problem of optical efficiency of light blades comprising a planar light guide with side-positioned light sources, especially when the thickness of the light blade is very small, e.g. 2 mm or less.

In the present description, a "planar" shape means that the shape has a first dimension (thickness) of a magnitude inferior to 50% of any other dimension (depth or width) of the shape.

### Technical solution

One object of the invention is a **light guide** for a lamp assembly, said light guide having two opposite large walls, an elongated thin exit face, a reflective surface opposite the exit face, a plurality of coupling locations for receiving light sources on one of the side walls, characterized in that it also comprises a plurality of collimators at the coupling locations, each collimator being arranged for collecting light emitted by a light source and directing a collimated beam towards the reflective surface, and in that the reflective surface is configured to focalize the reflected rays in a focal region located upstream of the exit face.

In the present description, collimator means an optical device primarily used to control the direction of light, enabling it to emerge as a parallel beam.

In the present description, "focalization region" or "region of focus" or "focal area" designates a limited range location where most of the beams coming from the reflective surface converge.

In the light guide of the invention, the remaining path of the rays from the focal region to the exit face is for de-focalization of the rays and avoid the appearance of spots at the exit face.

Thanks to the invention, a loss of light through the large opposite walls of the light guide is reduced because of the focalization upstream the front face.

The invention defines a fairly thin light guide. In the sense of the invention, a fairly thin object has a relatively small thickness compared to other dimensions, such as length and width or depth. The word "fairly" is used to indicate that the object or material is not extremely thin but is still thinner than average or expected. For example, a piece of paper could be "fairly thin" if it is not as thick as cardboard but is still thicker than some other types of paper. In an embodiment, the invention aims at a 2 mm thickness for the front face, or even less. But the overall light guide is thicker than the front face, especially in its reflective surface and at the coupling locations, though still thin. Instead of thin, the adjective "planar" may sometimes be used to describe a fairly thin object, even if it is strictly an abuse of language since a planar shape, in a mathematical sense, is a two-dimensional object.

According to the invention, a reflective surface reflects light collected from each light source and collimated by a collimator. This reflective surface has a parabolic cross section, so that collimated light is focalized on a line resulting from the extrusion of the focal point of the parabolic cross section.

Further advantages provided by the solution:

According to a preferred embodiment, the light guide is extruded in a direction parallel to the exit face and the reflective surface has a parabolic cross-section with its focus at the focal region. The extrusion process makes it easier to manufacture the light guide.

In addition, the parabolic profile helps collect as much light as possible. Therefore, although the thickness of the light blade is small, less light is decoupled from the side walls of the light guide.

According to a preferred embodiment, the coupling locations are formed as neighbouring domes, each dome having a hollow accommodation seat surrounded with a parabolic wall directed towards the reflective surface. This embodiment allows a more efficient illumination because of high integration of the light sources into the light guide.

According to a preferred embodiment, the part of the planar guide between the focal region and the exit face has a constant thickness, where the two large opposite walls are parallel. Thus, it is possible to insert the thin part with parallel walls in a blade opening of the front panel.

According to a preferred embodiment, the thickness of the light guide gradually decreases between the reflective surface and the focal region.

According to a preferred embodiment, the reflective surface has optic means to homogenize the reflected beam, such as flutes or cushions, allowing homogeneity of light at the exit face, without spots that would indicate the presence of individual light sources.

To further increase the homogeneity of light at the exit face, a macroscopic graining of at least one wall is possible. To that purpose, the standard and well-known surface texturing process VDI27 can be used. In particular, a graining can be applied to the exit face.

A further object of the invention is a **lamp assembly** comprising at least one light guide as described above.

### Brief description of drawings

The invention will be better understood upon reading the following description, provided only as an illustrative example. The terms "top", "bottom", "front" and "rear" refer to the directions once the vehicle lamp is installed on a vehicle oriented in its usual upright position. The following description is with reference to the attached drawings in which:
[Fig. 1] is a perspective view of a planar light guide according to one embodiment of the invention.
[Fig. 2] is a cross-section according to II-II of Fig. 3.
[Fig. 3] is a top view of the light guide of Fig. 1.

The light guide 1 is fairly thin, in the sense that it can be contained in a parallelepipedal shape whose thickness tₒ is less than 50% of any other of its length I and width w.

In this embodiment, it is globally curved to follow the shape of the (not represented) car body. This curvature is an aesthetic choice that does not modify the definition of the light guide as a fairly thin light guide. To make it simpler, the light guide can be considered equivalent to a light guide having a rectangular shape, i.e. with straight borders 2, 3, instead of curved borders.

Borders 2, 3 are front 2 and rear 3 borders. There are curved in the example, but the curvature is not a requirement.

The light guide 1 has domes 4 along its rear border 3. Domes 4 constitute coupling locations for light sources feeding the light guide 1 with light rays.

The light guide 1 has two side walls 5, 6, a large top wall 7 and a large bottom wall 8. The dimensions of the large walls 7, 8 are approximately w=25 cm and l= 45cm. The maximal overall thickness tₒ of the planar light guide is tₒ=4 cm at its thickest part, i.e. at the top of the domes 4. It is 2 cm at the base of the domes 4. In other words, if domes 4 are excluded, the light guide has a net thickness tₙ smaller than 25 % of its width w.

The light guide 1 has a trapezoidal cross-section, i.e. its large side walls 7, 8 are not parallel to each other in most of its surface. Only a flange 9 of the light guide 1 is flat, with a constant thickness of 2 mm.

The flange 9 ends at the front border 2, in an exit face 10 of 2 mm height. Opposite the exit face 10, at the rear border 3, the light guide 1 has a reflective surface 11 running more or less parallel to the exit face 10. The reflective surface 11 has a cross-sectional parabolic shape 12, although it is not a parabolic surface. It is a ruled surface whose generator is a parabolic curve 12 slid along a curved path which goes approximately parallel to the front face 10.

Each dome 4 of the upper large side wall 7 is meant to host a light source, in a hole 13 forming a seat to accommodate it. Details of the seat are standard. Each hole 13 is surrounded by a local parabolic wall 14, axed on the central axis of the hole, i.e. downwards in the orientation of the figures. Thanks to the local parabolic wall 14 of the dome 4, any light emitted by a (non-represented) light source located in the seat 13 is collimated and a parallel beam is directed downwards, towards the reflective surface 11, as shown by the vertical arrows. Hence, each parabolic wall 14 is an optic collimator.

The mathematics of the parabolic curve 12 is such that the reflective surface 11 focalizes the reflected rays in the direction of the exit face 10, at a location 15 between the flat flange 9 and the trapezoidal part of the light guide 1. This location 15, comprising one of the foci of the parabolic curve 12, is called the focal region.

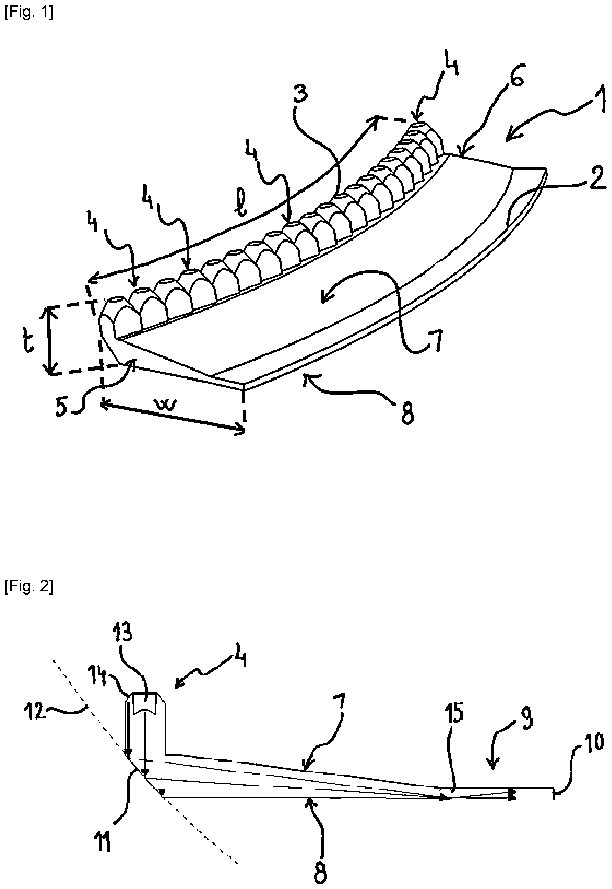

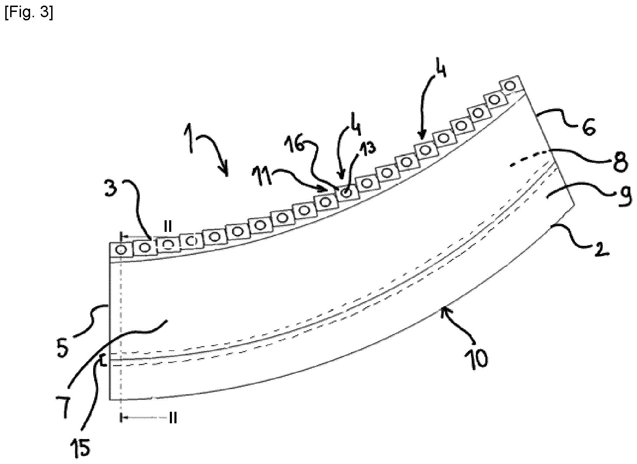

Thanks to the ruled shape of the reflective surface 11 and the alignment of the domes 4, light rays collimated by the domes 4 are all directed with focalization towards the focal region 15. In the cross-section of figure 2, the focal region looks like as a dot or a sphere. However, the observer must imagine the developed volume of the light guide along the path parallel to the front face 10, as shown in Fig. 3: in this developed volume, the focal region 15 is a line or a longitudinal volume located upstream of and parallel to the front face 10.

In practice, the light guide 1 can be manufactured by extrusion of, for instance, PMMA. Hence, the manufacturing process and the mathematical description match, as the shape of the light guide is defined by its cross section.

The focalization of the light rays in the focal region 15 helps reduce the decoupling of light along the large side faces 7, 8 of the light guide, thus enhancing the optic efficiency of the light guide. In the flange 9, rays de-focalize, ensuring a blur diffusion of light at the exit face 10 without showing spots indicating the individual light sources.

A graining of the surfaces of the exit face 10 and/or of the side walls 7, 8, can improve the distribution of diffused light.

As represented in the top view of Fig. 3, the reflective surface 11 can be split into rectangular optic means to homogenize the reflected beam. Optic means can be cushions 16. Light rays reflected by cushions 16 are diffused, allowing an increased homogeneity of light at the front face 10.

### List of references

1: light guide
2, 3: straight borders
4: dome
5, 6: large opposite side walls
7: top side wall
8: bottom side wall
9: flange
10: exit face
11: reflective surface
12 parabolic curve
13: hole
14: parabolic surface
15: focal region
16: cushions

## Claims

1. **Light guide** (1) for a lamp assembly said light guide having two opposite large walls (7, 8), an elongated thin exit face (10), a reflective surface (11) opposite the exit face (10), a plurality of coupling locations (4) for receiving light sources on one of the side walls,
**characterised in that** it also comprises a plurality of collimators (14) at the coupling locations (4), each collimator (14) being arranged for collecting light emitted by a light source and directing a collimated beam towards the reflective surface (11), and **in that** the reflective surface (11) is configured to focalize the reflected rays in a focal region (15) located upstream of the exit face (10).

2. Light guide according to claim 1, extruded in a direction parallel to the exit face (10) and the reflective surface (11) has a parabolic cross-section with its focus at the focal region (15).

3. Light guide according to any one of the preceding claims, wherein the coupling locations are formed as neighbouring domes (4), each dome (4) having a hollow accommodation seat (13) surrounded with a parabolic wall (14) directed towards the reflective surface (11).

4. Light guide according to any one of the preceding claims, wherein the part of the planar guide between the focal region (15) and the exit face (10) has a constant thickness, where the two large opposite walls (7, 8) are parallel.

5. Light guide according to any one of the preceding claims, wherein the thickness of the light guide gradually decreases between the reflective surface (14) and the focal region (15).

6. Light guide according to any one of the preceding claims, wherein the reflective surface (11) has optic means (16) to homogenize the reflected beam, such as flutes or cushions, allowing homogeneity of light at the exit face, without spots that would indicate the presence of individual light sources.

7. Light guide according to any one of the preceding claims, wherein a graining is applied to the exit face (10).

8. Light guide according to any one of the preceding claims, wherein the exit face (10) has a thickness of 2 mm or less.

9. Vehicle lamp comprising at least one light guide (1) according to any one of the preceding claims.
